Europäisches Patentamt

European Patent Office

Office européen des brevets

(19)

(11) Numéro de publication: **0 135 453**
**A1**

(12)
# DEMANDE DE BREVET EUROPEEN

(21) Numéro de dépôt: **84420124.4**

(22) Date de dépôt: **13.07.84**

(51) Int. Cl.⁴: **H 02 G 7/05**
**F 16 L 3/14**

(30) Priorité: **03.08.83 FR 8313121**

(43) Date de publication de la demande:
**27.03.85 Bulletin 85/13**

(84) Etats contractants désignés:
**AT BE CH DE GB IT LI LU NL SE**

(71) Demandeur: **MALICO : Société Anonyme**
**Zone Industrielle de l'Argentiére 9-11, rue Baptiste**
**Marcet**
**F-38600 Fontaine(FR)**

(72) Inventeur: **Lienart, Jean-Pierre Fernand**
**Saint Nizier d'Uriage**
**F-38410 Uriage(FR)**

(74) Mandataire: **Maureau, Pierre et al,**
**Cabinet GERMAIN & MAUREAU B.P. 3011**
**F-69392 Lyon Cedex 03(FR)**

(54) **Moyens de suspension d'un câble électrique isolé.**

(57) Ces moyens de suspension d'un câble électrique isolé (2) sont constitués par une sangle souple et non élastique (3) dont au moins une extrémité est équipée d'un anneau rigide (4) destiné au passage de la sangle (3) pour la formation d'une boucle (3a) susceptible d'enserrer le câble électrique (2), tandis que son autre extrémité est équipée d'un moyen d'accrochage à un organe de suspension.

FIG.1

EP 0 135 453 A1

1

# MOYENS DE SUSPENSION D'UN CABLE ELECTRIQUE ISOLE

La présente invention concerne des moyens de suspension d'un câble électrique isolé. Actuellement, ces moyens sont généralement constitués par un collier métallique pourvu d'une patte de fixation et auquel est éventuellement associé un manchon souple et élastique interposé entre le collier et le câble pour protéger l'isolant de ce dernier contre les risques de blessure par le collier.

La présente invention vise à simplifier et, par conséquent, à réduire le prix de revient de ces moyens. A cet effet, les moyens qu'elle concerne sont constitués par une sangle souple et non élastique dont au moins une extrémité est équipée d'un anneau rigide destiné au passage de la sangle pour la formation d'une boucle susceptible d'enserrer le câble isolé, tandis que son autre extrémité est équipée d'un moyen d'accrochage à un organe de suspension.

De préférence, l'anneau dont est équipée l'extrémité de la sangle destinée à permettre la formation d'une boucle est en une matière électriquement isolante, par exemple en une matière thermoplastique présentant les caractéristiques mécaniques souhaitables.

Suivant une forme d'exécution simple de l'invention, les moyens d'accrochage dont est pourvue la sangle, à son extrémité opposée à celle destinée à la formation d'une boucle, sont constitués par un anneau d'accrochage en matière rigide tel qu'en métal, qui, de préférence, est de dimensions inférieures à celles de celui dont est équipée l'autre extrémité de la sangle, de manière que l'anneau d'accrochage puisse être passé dans l'anneau destiné à la formation d'une boucle, mais que, par contre, ce dernier ne puisse pas être passé dans l'anneau d'accrochage. Cette disposition rend impossible tout montage à l'envers de ces moyens de suspension.

Suivant une variante d'exécution intéressante de l'invention, la sangle souple est constituée par une bande sans fin, dont les deux brins sont appliqués l'un contre l'autre avec ménagement, à au moins l'une de ses extrémités, d'un passant en forme de boucle dans lequel est engagé l'anneau pour la formation de la boucle destinée à enserrer le câble.

La formation de chaque passant d'extrémité de la sangle peut être obtenue par une couture transversale ou par la pose d'un rivet ou d'un oeillet.

La présence d'un oeillet à l'extrémité par laquelle la sangle doit être accrochée à un organe fixe de suspension peut être mise à profit pour l'engagement d'un crochet ou d'un boulon de fixation.

Si l'on souhaite que l'orientation de la boucle formée par la sangle soit stable, notamment si l'organe fixe d'accrochage de la sangle présente une surface d'appui orthogonale à l'axe du câble, ce qui obligerait la sangle à se vriller d'un quart de tour, à cette sangle est associée une patte chantournée dont chaque extrémité présente un perçage pour le passage d'un boulon de fixation.

Enfin, si l'on désire éloigner le câble de la surface d'appui verticale de l'organe fixe auquel est ancrée la sangle, il est prévu, associée à la sangle, une console présentant, solidaire d'une embase verticale de fixation, un bras de potence formant une piste, inclinée de haut en bas et en s'éloignant de l'embase, destinée à supporter une partie de la sangle et, en amont de cette piste, une broche transversale, horizontale et amovible apte à être engagée dans un passant ménagé à l'extrémité de la sangle opposée à celle équipée d'un anneau pour la formation d'une boucle.

Enfin, dans tous les cas, à la sangle peut être associé un manchon tubulaire en matière souple tel qu'en caoutchouc, présentant une fente longitudinale permettant son engagement sur le câble et, de préférence, une oreille radiale extérieure percée pour le passage de la sangle et rendant le manchon imperdable.

De toute façon, l'invention sera bien comprise à l'aide de la description qui suit, en référence au dessin schématique annexé, représentant, à titre d'exemples non limitatifs, quelques formes d'exécution de ces moyens de suspension :

Figure 1 est une vue en perspective d'une première forme d'exécution de l'invention dans le cas de son application à la suspension d'un câble électrique isolé multibrins ;

Figure 2 est une vue similaire à figure 1 illustrant une variante d'exécution de l'invention dans le cas de son application à la suspension d'un câble de télédistribution ;

Figure 3 est une vue similaire aux figures 1 et 2 illustrant le mode d'accrochage des moyens de l'invention à un organe fixe de support ;

Figure 4 est une vue partielle similaire à figure 3 montrant une variante d'exécution du mode d'accrochage des moyens de l'invention à un organe fixe de support ;

Figure 5 est une vue en perspective illustrant encore une variante d'exécution des moyens de l'invention.

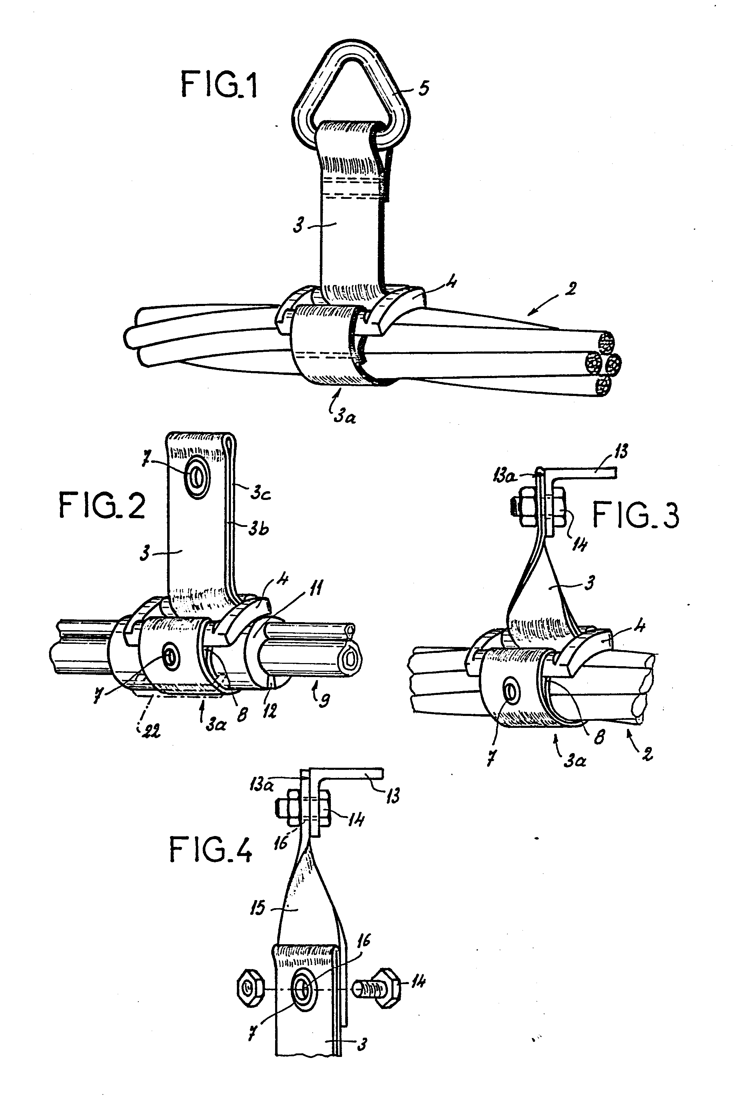

Dans l'exemple illustré sur la figure 1, le câble électrique isolé à suspendre est un câble (2) à quatre brins torsadés.

Les moyens de l'invention comprennent une sangle (3) en matériau souple et non élastique tel qu'en fibres textiles tissées ou tricotées, dont chaque extrémité est équipée d'un anneau, respectivement (4 et 5).

Comme le montre le dessin, l'extrémité de la sangle (3) équipée de l'anneau (4) est conformée en boucle (3a) par passage de l'anneau (5) et de l'autre extrémité de la sangle dans l'anneau (4) et cette boucle (3a) est destinée à enserrer le câble électrique isolé (2). L'anneau (5) dont est équipée l'extrémité opposée de la sangle (3) est destiné à permettre son accrochage à un organe de suspension prévu à cet effet et, notamment, au crochet d'une console d'un type connu, non représentée sur le dessin.

Pour des raisons de sécurité faciles à comprendre, l'anneau (4), à l'aide duquel est conformée la boucle (3a), est réalisé en matière rigide non conductrice de l'électricité, tel qu'en matière thermoplastique ; par contre, l'anneau (5), dont est équipée l'extrémité opposée de la sangle (3), et qui est destiné à permettre son accrochage à un organe de suspension tel qu'une console, peut être réalisé en métal, c'est-à-dire dans le même matériau que la console précitée.

De préférence, les dimensions de l'anneau (5) sont inférieures à celles de l'anneau (4), de manière que l'anneau (5) puisse être passé à l'intérieur de l'anneau (4), mais que l'anneau (4) ne puisse pas être passé à l'intérieur de l'anneau (5). Cette disposition a pour but de rendre impossible tout montage à l'envers de ces moyens de suspension.

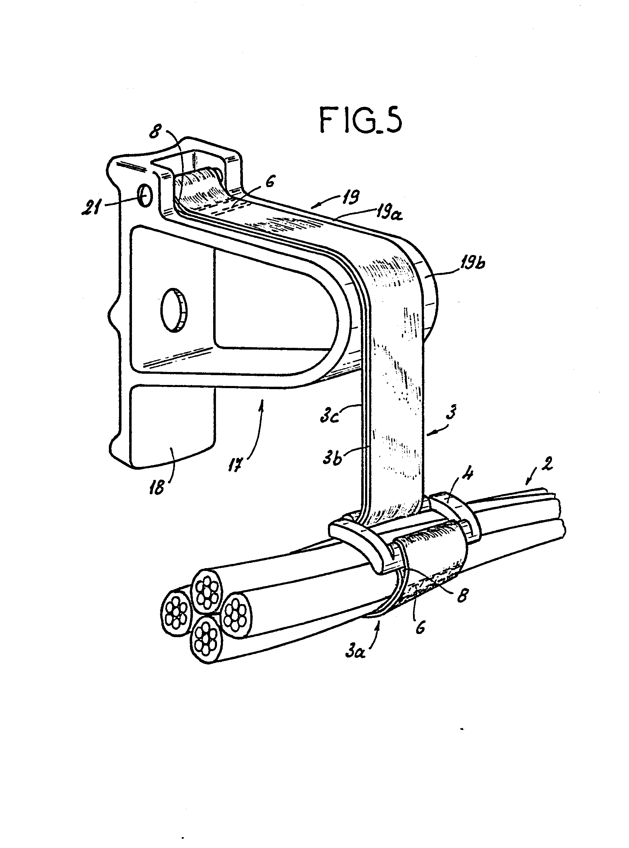

Dans les exemples illustrés sur les figures 2 à 5, la sangle (3) est constituée par une bande sans fin dont les deux brins (3b) et (3c) sont appliqués l'un contre l'autre sur la presque totalité de sa longueur, par exemple au moyen de coutures transversales (6) comme illustré sur la figure 5 ou encore à l'aide de rivets ou d'oeillets (7) comme illustré sur les figures 2 à 4, avec ménagement à au moins l'une des extrémités de la sangle (3) d'un passant (8) en forme de boucle fermée dans laquelle est engagé l'anneau (4) destiné à la formation de la boucle (3a) prévue pour embrasser et supporter le câble (2).

L'utilisation d'un oeillet (7) aux lieu et place des coutures transversales (6) présente le double avantage d'être d'un coût moins élevé et de pouvoir être utilisé comme moyen d'accrochage à l'organe fixe de support de l'extrémité de la sangle (3) opposée à celle équipée de l'anneau (4) en vue de la formation de la boucle (3a).

Dans le cas où le câble (2) est un câble fragile tel qu'un câble de télédistribution (9) comme celui représenté dans l'exemple illustré sur la figure 2, à la sangle (3) est associé un manchon tubulaire (11) en matière souple tel qu'en caoutchouc ou similaire présentant une fente longitudinale (12) permettant l'engagement du câble (9 ) dans son alésage et destiné à être interposé dans la boucle (3a) entre la sangle (3) et le câble ( 9 ).

Comme montré en traits mixtes sur la figure 2, le manchon tubulaire (11) présente avantageusement une oreille percée (22) en forme d'étrier prévue pour le passage de la sangle (3), de manière à le rendre imperdable.

Comme le montrent les figures 2 et 3, l'oeillet (7) prévu à l'extrémité de la sangle (3) opposée à celle équipée de l'anneau (4) peut être utilisé pour la fixation de la sangle (3) à un organe fixe de support, tel que le crochet d'une console ou similaire. Cet oeillet peut aussi être utilisé pour la fixation de cette extrémité de la sangle (3) à une cornière (13) du type utilisé pour les installations téléphoniques, cette fixation pouvant être assurée par un boulon (14) traversant un trou prévu pour son passage dans l'aile verticale de la cornière (13) ainsi que l'oeillet (7) de la sangle (3).

Comme le montre l'exemple illustré sur la figure 3, la sangle (3), par sa souplesse lui permettant d'être vrillée, autorise la suspension du câble (2) considéré, bien que la face verticale (13a) de la cornière (13), contre laquelle l'oeillet (7) de la sangle (3) est fixé par le boulon (14), soit orientée perpendiculairement à l'axe du câble (2). Cependant, si l'on veut obtenir une meilleure stabilité de la suspension du câble (2) et notamment éviter le vrillage de la sangle (3), il est possible d'utiliser, comme illustré par la figure 4, entre la cornière (13) et l'extrémité considérée de la sangle (3) équipée de l'oeillet (7), une pièce intermédiaire (15) constituée par une patte chantournée sur 90° et présentant à chacune de ses extrémités un perçage (16) dont l'un sert à sa fixation à la cornière (13) et dont l'autre sert à la fixation à cette pièce (15) de l'extrémité précitée de la sangle (3).

Dans l'exemple illustré sur la figure 5, à la sangle (3) est associée une console (17) présentant une embase verticale (18) de fixation contre un organe support fixe qui peut être un mur ou un poteau, embase dont est solidaire un bras de potence (19) formant une piste (19a) inclinée de haut en bas et en direction de l'extérieur et présentant, à son extrémité libre, un arrondi (19b), cette piste (19a) étant destinée à recevoir et supporter une partie de la sangle (3) dont l'extrémité opposée à celle équipée de l'anneau (4) présente un passant (8) dans lequel peut être engagée une broche (21) fixée de manière amovible à l'embase (18) à la naissance de la piste (19a). Comme on le voit, les moyens de suspension d'un câble conformes à l'invention sont d'un prix de revient très peu élevé, tout en étant d'une grande sûreté et d'une grande souplesse d'utilisation, ces moyens de suspension pouvant en outre être appliqués à tous types de câbles extérieurs, qu'il s'agisse d'un câble d'alimentation électrique, d'un câble de distribution téléphonique, ou encore d'un câble de télédistribution.

Comme il va de soi et comme il ressort de ce qui précède, l'invention ne se limite pas aux seules formes d'exécution de ces moyens de suspension d'un câble électrique isolé qui ont été décrites ci-dessus à titre d'exemples ; elle en embrasse au contraire toutes les variantes de réalisation.

6

REVENDICATIONS

1. - Moyens de suspension d'un câble électrique isolé (2), caractérisés en ce qu'ils sont constitués par une sangle souple et non élastique (3) dont au moins une extrémité est équipée d'un anneau rigide (4) destiné au passage de la sangle (3) pour la formation d'une boucle (3a) susceptible d'enserrer le câble électrique (2), tandis que son autre extrémité est équipée d'un moyen d'accrochage à un organe de suspension.

2. - Moyens de suspension d'un câble électrique isolé (2) selon la revendication 1, caractérisés en ce qu'au moins l'anneau dont est équipée l'extrémité de la sangle (3) destinée à former une boucle (3a) est en une matière rigide électriquement isolante, tel qu'en matière thermoplastique.

3. - Moyens de suspension d'un câble électrique isolé (2) selon la revendication 1 ou la revendication 2, caractérisés en ce que les moyens d'accrochage dont est pourvue la sangle (3) à son extrémité opposée à celle destinée à la formation d'une boucle (3a) sont constitués par un anneau (5) en matière rigide de n'importe quelle nature tel qu'en métal.

4. - Moyens de suspension d'un câble électrique isolé (2) selon la revendication 3, caractérisés en ce que l'anneau d'accrochage (5) dont est équipée l'une des extrémités de la sangle (3) pour son accrochage à un organe de suspension est de dimensions inférieures à celles de l'anneau (4) dont est équipée l'autre extrémité de la sangle (3) et qui est destiné à permettre la formation de la boucle (3a), de telle sorte que l'anneau d'accrochage (5) puisse passer dans l'anneau (4) prévu pour permettre la formation de la boucle (3a), mais que ce dernier ne puisse pas passer dans l'anneau d'accrochage (5).

5. - Moyens de suspension d'un câble électrique isolé (2) selon la revendication 1 ou la revendication 2, caractérisés en ce que la sangle souple (3) est constituée par une bande sans fin dont les deux brins (3b, 3c) sont appliqués l'un contre l'autre avec ménagement, à au moins l'une de ses extrémités, d'un passant (8) en forme de boucle dans laquelle est engagé l'anneau (4) prévu pour la formation de la boucle (3a) destinée à enserrer le cable (2).

6. - Moyens de suspension d'un câble électrique isolé (2) selon la revendication 5, caractérisés en ce que la formation de chaque passant (8) d'extrémité de la sangle (3) est obtenu par une couture transversale (6).

7. - Moyens de suspension d'un câble électrique isolé (2) selon la revendication 5, caractérisés en ce que la formation de chaque passant (8) d'extrémité de la sangle (3) est obtenu par la pose d'un rivet ou oeillet (7).

8. - Moyens de suspension d'un câble électrique isolé (2) selon la revendication 7, caractérisés en ce que l'oeillet (7) prévu à l'extrémité de la sangle (3) opposée à celle équipée de l'anneau (4) constitue le moyen d'accrochage de la sangle (3) à un organe fixe de suspension.

9. - Moyens de suspension d'un câble électrique isolé (2) selon l'une quelconque des revendications 5 à 8, caractérisés en ce qu'à la sangle (3) est associée une patte (15) chantournée sur 90°, dont chaque extrémité présente un perçage (16) pour le passage d'un boulon de fixation de la sangle (3) ou à un organe fixe de support (13).

10. - Moyens de suspension d'un câble électrique isolé selon l'une quelconque des revendications 1 à 7, caractérisés en ce qu'à la sangle (3) est associée une console (17) présentant, solidaire d'une embase verticale de fixation (18), un bras de potence (19) formant une piste (19a) inclinée de haut en bas et en s'éloignant de l'embase (18) dont l'extrémité libre (19b) est arrondie vers le bas et destinée à supporter une partie de la sangle (3), et en amont de cette piste (19a) une broche transversale horizontale et amovible (21) apte à être engagée dans le passant (8) ménagé à l'extrémité de la sangle (3) opposée à celle équipée de l'anneau (4).

11. - Moyens de suspension d'un câble électrique isolé (2) selon l'une quelconque des revendications précédentes, caractérisés en ce qu'à la sangle (3) est associé un manchon tubulaire (11) en matière souple tel qu'en caoutchouc ou similaire, présentant une fente longitudinale (12) permettant son engagement sur le câble (9), et destiné à être interposé entre le câble (2a) et la bouche (3a) de la sangle (3).

12. - Moyens de suspension d'un câble électrique isolé (2) selon la revendication 11, caractérisés en ce que le manchon (11) présente en outre une oreille radiale extérieure (22) percée pour le passage de la sangle (3).

FIG.1

FIG.2

FIG.3

FIG.4

# FIG.5

Office européen
des brevets

**RAPPORT DE RECHERCHE EUROPEENNE**

**0135453**
Numéro de la demande

EP 84 42 0124

## DOCUMENTS CONSIDERES COMME PERTINENTS

| Categorie | Citation du document avec indication. en cas de besoin. des parties pertinentes | Revendication concernee | CLASSEMENT DE LA DEMANDE (Int Cl 4) |
|---|---|---|---|
| X | FR-A-1 144 133 (LANGUMIER)<br><br>* page 1, colonne de gauche, alinéas 4,5 et colonne de droite, alinéas 1,5,6; page 2, colonne de gauche, alinéa 1; figures 1,3 * | 1,2,4, 7 | H 02 G 7/05<br>F 16 L 3/14 |
| Y | | 3,5,8, 10-12 | |
| | --- | | |
| Y | FR-A-2 487 036 (OMEGA)<br>* page 4, lignes 6-14; figure 1 * | 3 | |
| | --- | | |
| Y | FR-A-2 121 441 (DERVAUX)<br>* page 4, lignes 1-5; figure 5 * | 5 | |
| | --- | | |
| Y | FR-A-1 108 904 (MABILLE)<br>* page 1, colonne de gauche, alinéa 8 - page 2, colonne de gauche, alinéa 5; figures 2,5,6 * | 8 | **DOMAINES TECHNIQUES RECHERCHES (Int. Cl.4)**<br><br>H 02 G 7/00<br>F 16 L 3/00 |
| A | | 1,3,4 | |
| | --- | | |
| Y | CH-A- 579 736 (ANDRIS)<br>* colonne 3, lignes 9-16; figure 2 * | 10 | |
| | --- | | |
| Y | EP-A-0 020 943 (BÜCHELE)<br>* page 6, lignes 6-10; figures 1-3 * | 11,12 | |
| | ----- | | |

Le présent rapport de recherche a été établi pour toutes les revendications

| Lieu de la recherche | Date d'achèvement de la recherche | Examinateur |
|---|---|---|
| LA HAYE | 05-11-1984 | TIELEMANS H.L.A. |